# EUROPÄISCHE PATENTANMELDUNG

(11) **EP 2 662 738 A1**
(43) Veröffentlichungstag der Anmeldung: **13.11.2013**
(21) Anmeldenummer: 12166968.3
(22) Anmeldetag: 07.05.2012
(51) Int. Cl.: G05B 19/042

(54) **Verfahren und Applikation zur Konfigurierung einer Komponente einer industriellen Automatisierungsanordnung mittels eines mobilen Geräts**

(71) Anmelder: Siemens Aktiengesellschaft, 80333 München (DE)
(72) Erfinder: Adling, Anja, 90478 Nürnberg (DE); Rotmensen, Sander, 90518 Altdorf b. Nürnberg (DE); Glas, Karl, 91074 Herzogenaurach (DE)

(57) **Zusammenfassung**

Die Erfindung betrifft ein Verfahren und eine Applikation zur Konfigurierung einer Komponente (NK1) einer industriellen Automatisierungsanordnung, wobei durch die Konfigurierung in der Komponente zumindest ein Parameter eingegeben oder verändert wird. Dabei wird zur Konfigurierung ein mobiles Gerät (MG) eingesetzt wird, wobei zuerst eine zur Konfigurierung eingerichtete Applikation von einer der Komponenten (NK1) des Automatisierungsnetzwerkes (AN) zu dem mobilen Gerät (MG) übertragen wird, danach die Applikation auf dem mobilen Gerät zur Ausführung gebracht wird, weiter zwischen den mobilen Gerät (MG) und der zu konfigurierenden Komponente (NK1) eine logische Verbindung (DV1, DV2) etabliert wird, und schließlich mittels der logischen Verbindung (DV1, DV2) der zumindest eine Parameter durch die Applikation des mobilen Gerätes (MG) eingegeben oder verändert wird.

## Beschreibung

Die Erfindung betrifft ein Verfahren zur Konfigurierung einer Komponente einer industriellen Automatisierungsanordnung gemäß dem Oberbegriff des Patentanspruchs 1 und eine Applikation zur Konfigurierung einer Komponente einer industriellen Automatisierungsanordnung gemäß dem Oberbegriff des Patentanspruchs 10.

Komponenten in industriellen Automatisierungsanordnungen, beispielsweise sog. PLCs (Programmable Logic Controller) und andere mikroprozessorgesteuerte Geräte, sind regelmäßig Bestandteil eines proprietären Netzwerkes, auch Automatisierungsnetzwerk genannt, womit Programme und Daten übermittelt werden. Solche Netzwerke können beispielsweise ein Ethernet-Netzwerk, ein Profinet-Netzwerk oder ein anderes gebräuchliches Netzwerk der Automatisierungstechnik sein; auch drahtlose Netze, beispielsweise WLANs, sind zur Vernetzung der Komponenten einsetzbar.

Die Komponenten weisen dabei viele Konfigurationsmöglichkeiten auf, d.h., dass eine Vielzahl von Parametern konfiguriert werden müssen, damit die Komponenten im Automatisierungsnetzwerk Daten austauschen können und ihre Funktion erfüllen können. Grundlegende Parameter stellen beispielsweise die Netzwerkparameter dar, die grundsätzlich erforderlich sind, um überhaupt über das Automatisierungsnetzwerk auf die Komponenten zugreifen zu können. Sofern diese Netzwerk-Parameter konfiguriert sind, können mittels des Automatisierungsnetzwerks die für den operativen Betrieb wichtigen Programme und Parameter zu der betreffenden Komponente übermittelt werden.

Die Konfiguration der Komponenten erfolgt typischer Weise über Web-Browser, Command-Line-Interfaces oder SNMP-Benutzeroberflächen, die regelmäßig auf einem separaten Eingabegerät, beispielsweise Personal-Computer, Laptop oder einem proprietären "Panel", bedient werden, wobei diese separaten Eingabegeräte typischer Weise ebenfalls über das Automatisierungsnetzwerk mit der Automatisierungsanordnung verknüpft sind bzw. Bestandteil der Automatisierungsanordnung sind. Eine Konfigurierung einer Komponente mittels eines Eingabegerätes, welches an dem Automatisierungsnetzwerk angeknüpft ist, erfordert dabei, dass bereits eine grundlegende Konfigurierung der Komponente stattgefunden hat, insbesondere, dass die Netzwerk-Parameter konfiguriert sind. Sofern eine automatische Konfigurierung der Netzwerkparameter, beispielsweise mittels des BootP-Protokolls oder des DHCP-Protokolls, nicht möglich ist, müssen diese Netzwerk-Parameter direkt an der zu konfigurierenden Komponente eingegeben werden, beispielsweise mittels einer kleinen Benutzeroberfläche oder mittels eines direkten Zugangs (Programmierschnittstelle, z.B. serieller Anschluss). Beide Vorgehensweisen sind mit einem gesonderten Aufwand verbunden, der nach Möglichkeit vermieden werden soll.

Der Einsatz der bekannten Eingabegeräte ist mit weiteren Nachteilen verbunden, wobei beispielsweise bei der Verwendung der proprietären "Panels" zum einen diese bereitgestellt werden müssen, und zum anderen diese "Panels" mittels des Automatisierungsnetzwerks angeknüpft sind, wobei eine Basis-Konfigurierung (z.B. Netzwerk-Parameter) in einigen Fällen nicht vorgenommen werden kann.

Es besteht also ein Bedarf, von proprietären Eingabegeräten weniger abhängig zu sein und eine einfache und sichere Konfigurierung von Automatisierungskomponenten zu gewährleisten.

Es ist ein Kerngedanke der Lösung dieser Aufgabe, zu der Konfigurierung einer Komponente einer industriellen Automatisierungsanordnung ein den meisten Benutzern vertrautes und zugängliches Gerät einzusetzen, nämlich ein mobiles Gerät im Sinne eines Tablet-PCs oder Smartphones. Dabei wird erfindungsgemäß vorgeschlagen, anstelle eines Web-Browsers, der nur eingeschränkte Zugriffsmöglichkeiten auf die Hardwareressourcen der entsprechenden Geräte hat, eine einfach ladbare Applikation, eine sog. "App", zu verwenden, wobei diese aus Sicherheitsgründen von einer Komponente des Automatisierungsnetzwerks geladen werden soll. Neben dem Sicherheitsaspekt wird dabei auch dem Umstand Rechnung getragen, dass Automatisierungsnetzwerke aus Sicherheitsgründen häufig nicht mit dem allgemein zugänglichen "Internet" verbunden sind und solche Verbindungen auch für die zur Konfigurierung genutzten Geräte zumindest zum Zeitpunkt der Konfigurierung nicht gewünscht sind. Dadurch, dass die Applikation in dem Automatisierungsnetzwerk selbst vorgehalten wird, hat ein Anlagenbetreiber die volle Kontrolle über die zur Konfigurierung eingesetzten Hilfsmittel. Überdies haben die bekannten mobilen Geräte den Vorteil, dass diese regelmäßig eine Reihe meist drahtloser Kommunikationsmöglichkeiten aufweisen, so dass eine direkte Funkverbindung zwischen dem mobilen Gerät und der zu konfigurierenden Komponente möglich ist. Dies bedeutet, dass eine Konfigurierung auch dann möglich ist, wenn die für den Zugang zum Automatisierungsnetzwerk erforderlichen Netzwerk-Parameter in der betreffenden Komponente noch überhaupt nicht konfiguriert sind.

Die Aufgabe wird insbesondere durch ein Verfahren gemäß dem Patentanspruch 1 und durch eine Applikation gemäß dem Patentanspruch 10 gelöst.

Dabei ist zur Lösung der Aufgabe ein Verfahren zur Konfigurierung einer Komponente einer industriellen Automatisierungsanordnung vorgesehen, wobei durch die Konfigurierung in der Komponente zumindest ein Parameter eingegeben oder verändert wird, und wobei die Komponente mit weiteren Komponenten der Automatisierungsanordnung mittels eines Automatisierungsnetzwerkes verknüpft ist. Dabei wird zur Konfigurierung ein mobiles Gerät eingesetzt, wobei in einem ersten Schritt eine zur Konfigurierung eingerichtete Applikation von einer der Komponenten des Automatisierungsnetzwerkes zu dem mobilen Gerät übertragen wird, wobei in einem zweiten Schritt die Applikation auf dem mobilen Gerät zur Ausführung gebracht wird, wobei in einem dritten Schritt zwischen den mobilen Gerät und der zu konfigurierenden Komponente eine logische Verbindung etabliert wird, und wobei in einem vierten Schritt mittels der logischen Verbindung der zumindest eine Parameter durch die Applikation des mobilen Gerätes eingegeben oder verändert wird. Mittels eines solchen Verfahrens ist die sichere und einfache Konfigurierung einer Komponente eines industriellen Umfeldes mittels eines gebräuchlichen mobilen Gerätes möglich, welches den meisten Anwendern vertraut ist und bei vielen Anwendern ohnehin vorhanden ist. Durch dieses Verfahren ist ein Anwender auch nicht an einen bestimmten Raum oder einen entsprechenden Anschluss gebunden, sondern kann sich frei in der Automatisierungsanordnung bewegen. Weiterhin ist durch das Vorhalten der Applikation im Automatisierungsnetzwerk zum einen eine vollständige Kontrolle über die Herkunft und Sicherheit der zu verwendenden Applikation gegeben, und zum anderen ist eine Verbindung zu einem öffentlichen Netzwerk, beispielsweise dem Internet, für den Bezug und den Betrieb der Applikation nicht erforderlich.

Die Lösung der Aufgabe sieht weiterhin eine Applikation zur Konfigurierung einer Komponente vor, wobei eine Applikation zur Konfigurierung einer Komponenten einer industriellen Automatisierungsanordnung vorgeschlagen wird, wobei die Applikation auf einer logisch in der Automatisierungsanordnung angeordneten Komponente gespeichert ist, wobei die Applikation von der Komponente auf das mobile Gerät übertragbar ist, und wobei die Applikation bei ihrer Ausführung auf dem mobilen Gerät zur Etablierung einer logischen Verbindung zu der zu konfigurierenden Komponente und zur Konfigurierung dieser Komponente mittels der Verbindung eingerichtet ist. Durch eine solche Applikation können die anhand des erfindungsgemäßen Verfahrens diskutierten Vorteile realisiert werden.

Vorteilhafte Ausgestaltungen des erfindungsgemäßen Verfahrens sind in den abhängigen Patentansprüchen angegeben. Die dabei diskutierten Merkmale und deren Vorteile gelten sinngemäß auch für die erfindungsgemäße Applikation. Die diskutierten vorteilhaften Ausgestaltungen können entweder einzeln, aber auch in Kombination miteinander realisiert sein.

Vorteilhaft wird als das mobile Gerät ein Tablet-PC oder ein Smartphone verwendet, weil damit Geräte verwendet werden können, die zum einen preiswert sind, weiterhin nahezu jedem Benutzer vertraut sind und ferner in vielen Fällen bereits vorhanden sind. Solche mobilen Geräte lassen sich naturgemäß nicht nur für die Konfigurierung von Komponenten in Automatisierungsnetzwerken verwenden, sondern können gleichzeitig auch eine Vielzahl andere Aufgaben erfüllen und sind dabei flexibler einsetzbar als proprietäre Geräte bzw. die bekannten "Panels".

Die Applikation wird vorteilhaft aus einem eine Mehrzahl von Applikationen bereit haltenden Programmspeicher abgerufen, der auch als sog. "App Store" ausgestaltet sein kann. Insbesondere ist es möglich, für verschiedene Plattformen der mobilen Geräte (beispielsweise Android, Windows oder iOS) verschiedene Versionen der Applikation vorzuhalten, wobei eine Applikation auch für eine Mehrzahl unterschiedlicher Komponenten geeignet sein kann, andererseits jedoch auch für verschiedene Typen von Komponenten der Automatisierungsnetzwerke auch verschiedene Applikationen vorgehalten sein können. In einer vorteilhaften Ausgestaltung wird zu Beginn einer Konfigurierungssitzung der Typ der zu konfigurierenden Komponenten von dieser ausgelesen, so dass ein entsprechendes Konfigurierungs-Programm oder Konfigurierungs-Modul (Programmteil) als Applikation geladen oder aktiviert werden kann. Vorteilhaft ist der Zugang zu dem Programmspeicher bereits in den zu verwendenden mobilen Geräten administriert. In einer alternativen Ausgestaltung kann jedoch auch der Zugang zu dem zu verwendenden Programmspeicher von der zu konfigurierenden Komponente ausgelesen werden, beispielsweise mittels eines aufgedruckten QRC-Codes, indem die Adresse (URL) in dem lokalen Automatisierungsnetzwerk zum Zugang zu dem zu verwendenden Programmspeicher und - vorteilhaft - sogar für den Zugang zu der konkret zu verwendenden Applikation umfasst. Auch ein Zugriffscode für die Komponenten kann so auf das mobile Gerät übermittelt werden. In einer besonders vorteilhaften Ausgestaltung wird die zu verwendende Applikation von der zu konfigurierenden Komponente selbst bereitgestellt und beispielsweise mittels des Bluetooth-Protokolls oder mittels eines anderen - vorzugsweisen drahtlosen - Übertragungsverfahrens zu dem mobilen Gerät übermittelt. Eine solche, vorzugsweise drahtlose Verbindung direkt zwischen dem mobilen Gerät und der zu konfigurierenden Komponente ist weiterhin auch deshalb vorteilhaft, weil damit auch solche Komponenten konfiguriert werden können, die noch nicht aktiv im Automatisierungsnetzwerk eingebunden sind, weil beispielsweise noch keine Netzwerk-Parameter administriert sind oder weil noch überhaupt keine Verbindung zu dem Automatisierungsnetzwerk geschaltet oder freigegeben ist. In einer besonders vorteilhaften Ausgestaltung kann auch ein RFID-Übertragungsprotokoll für die Verbindung zwischen dem mobilen Gerät und der fraglichen Komponente eingesetzt werden, wodurch sich u.a. der Vorteil ergibt, dass eine Konfigurierung auf solche Fälle beschränkt werden kann, in denen sich das mobile Gerät in unmittelbarer Nähe der zu konfigurierenden Komponente befindet. Dies kann oftmals aus Sicherheitsgründen notwendig sein.

Ein Ausführungsbeispiel des erfindungsgemäßen Verfahrens wird nachfolgend anhand der Zeichnung erläutert.

Dabei zeigt:
- Figur 1: eine Anordnung aus mehreren Komponenten einer industriellen Automatisierungsanordnung, bei der ein mobiles Gerät drahtlos mit einer zu konfigurierenden Komponente kommuniziert, und
- Figur 2: dieselbe Anordnung, wobei das mobile Gerät drahtlos mit dem Automatisierungsnetzwerk kommuniziert.

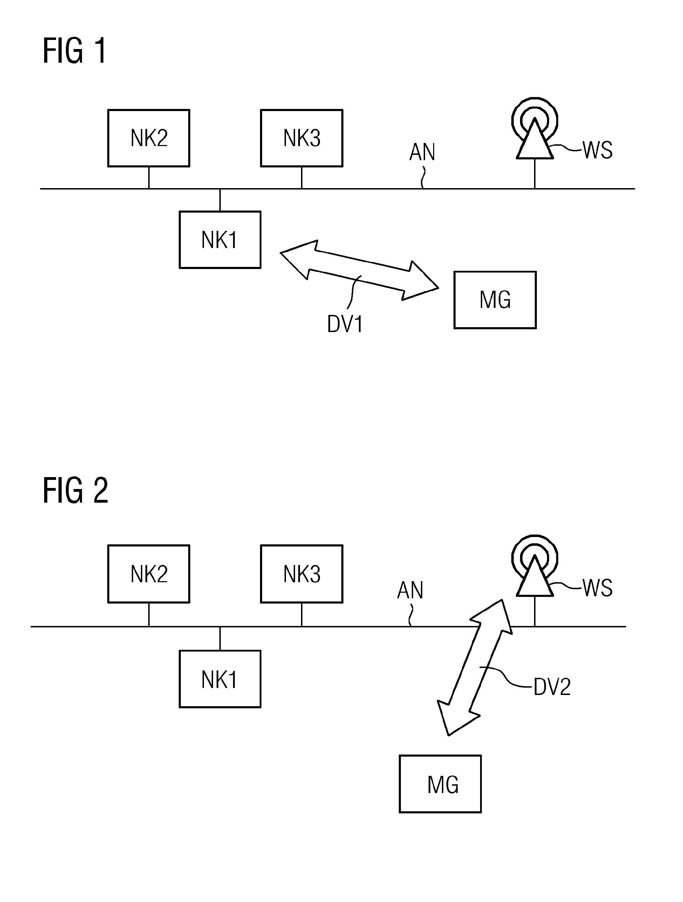

In der Figur 1 sind die Komponenten NK1, NK2, NK3 (Netzwerkkomponenten einer industriellen Automatisierungsanordnung) dargestellt, die Bestandteil eines Automatisierungsnetzwerks AN sind und über dieses Automatisierungsnetzwerk Programme und Daten austauschen können. Mittels eines Gateways WS (Wireless Sender) können auch drahtlose Geräte mit den Komponenten NK1, NK2, NK3 des Automatisierungsnetzwerkes AN Programme und Daten austauschen. Exemplarisch ist dabei das mobile Gerät MG dargestellt, wobei im Folgenden beschrieben werden soll, wie die Komponente NK1 durch das mobile Gerät MG konfiguriert wird.

Das mobile Gerät MG baut eine vorzugsweise drahtlose Verbindung DV1 direkt mit der zu konfigurierenden Komponente NK1 auf. Dies kann beispielsweise eine Bluetooth-Verbindung sein; in anderen Ausgestaltungen der Erfindung sind jedoch auch andere drahtlose, aber auch drahtgebundene Verbindungen verwendbar. Über die drahtlose Verbindung DV1 lädt das mobile Gerät MG nun von der zu konfigurierenden Komponente NK1 eine Applikation zur Konfigurierung und startet diese. Die Applikation ist in der Komponente NK1 in einem sogenannten "lokalen App-Store" gespeichert, wobei in einer vorteilhaften Ausgestaltung auch mehrere solche Applikationen für mobile Geräte, die auf unterschiedlichen technischen Plattformen (beispielsweise Android, Windows, iOS) basieren, vorgehalten werden können. Ebenso können für verschiedene zu konfigurierende Ziel-Plattformen oder -typen, also unterschiedliche zu konfigurierende Komponenten, unterschiedliche Applikationen vorhanden sein. Selbstverständlich kann zur Erhöhung der Sicherheit vorgesehen sein, dass vor oder nach dem Übertragen der Applikation oder zumindest vor dem Start einer Konfigurierungssitzung Sicherheitsbarrieren überwunden werden müssen, beispielsweise die Eingabe eines Codes, das Vorsehen einer Signatur oder dergleichen. Nach dem Start der Applikation wird über die drahtlose Verbindung DV1 oder über eine neu etablierte (drahtlose oder drahtgebundene) Verbindung zwischen dem mobilen Gerät MG und der Komponente NK1 eine logische Verbindung (Kanal, Sitzung) etabliert oder alternativ eine, beispielsweise bereits zur Übertragung der Applikation genutzte, bestehende logische Verbindung weiterverwendet. Mittels dieser logischen Verbindung DV1 werden dann die zu Konfigurierung der Komponenten NK1 erforderlichen Befehle und Parameter (Daten) ausgetauscht und mittels dieser die Komponente NK1 konfiguriert.

In einer alternativen Ausführungsform kann die Applikation auch von einer anderen Komponente NK2, NK3 des Automatisierungsnetzwerkes AN geladen werden, wobei beispielsweise auf einer der Komponenten NK2, NK3 ein für die Automatisierungsanordnung zentraler "App-Store" vorhanden sein kann. Die Adresse dieses "App-Store" kann beispielsweise einmalig in das mobile Gerät MG eingegeben werden, so dass Änderungen an Applikationen nur noch zentral an einer Stelle vorgenommen werden müssen. In einer weiteren, vorteilhaften Ausgestaltung kann mittels der drahtlosen Verbindung DV1 oder aber auch auf optischen Wege, beispielsweise durch das Lesen eines QRC-Codes (Quick Response Code) mittels einer Kamera des mobilen Gerätes MG, eine Adresse (Pfad, URL) oder ein Zugangscode für den zentralen "App-Store" zu dem mobilen Gerät MG übermittelt werden, wonach das mobile Gerät MG mit Hilfe dieser ausgelesenen Informationen die passende Applikation startet und, sofern diese noch nicht auf dem mobilen Gerät MG verfügbar ist, aus dem "App-Store" bezieht. Die auf optischem oder anderem Wege aus der Komponente NK1 ausgelesenen Informationen können weiterhin auch Zugangscodes umfassen, so dass sichergestellt ist, dass genau dasjenige Gerät (Komponente) konfiguriert wird, welches mit der Kamera des mobilen Gerätes oder einer anderen Nahfeld-Kommunikationsverbindung DV1 erfasst wurde. In diesem Zusammenhang sind besonders vorteilhaft auch RFID-Verbindungen einsetzbar, wobei durch die begrenzte Reichweite solcher RFID-Verbindungen sichergestellt werden kann, dass nicht versehentlich ein weiter entferntes Gerät (Komponente) konfiguriert wird.

In der Figur 2 ist eine im Vergleich zur Anordnung gemäß der Figur 1 leicht abweichende Konfiguration gezeigt, wobei anstelle einer direkten drahtlosen Verbindung DV1 aus der Figur 1 nunmehr das mobile Gerät MG mittels der drahtlosen Verbindung DV2 direkt Daten mit dem Automatisierungsnetzwerk AN austauscht. Dies bedeutet zum einen, dass die Applikation, die zur Konfigurierung der Komponente NK1 benötigt wird, über das Automatisierungsnetzwerk AN, ggf. unter Zwischenschaltung des Gateways WS, von einer der Komponenten NK1, NK2, NK3 geladen wird. Selbstverständlich kann auch hier auf einer der Komponenten NK1, NK2, NK3 ein zentraler "App-Store" eingerichtet sein. Zum anderen bedeutet dies, dass auch die anschließende Konfigurierung der Komponente NK1 mittels eines Zugangs (logische Verbindung) über das Automatisierungsnetzwerk AN, gleichfalls unter Zwischenschaltung der drahtlosen Verbindung DV2 und ggf. des Gateways WS, erfolgt. Dies erfordert natürlich, dass die Komponente NK1 bereits "kommunikationsfähig" an dem Automatisierungsnetzwerk AN angebunden ist.

In der Praxis sind auch Kombinationen aus den anhand der Figuren 1 und 2 erläuterten Verfahren zur Konfigurierung einsetzbar. So ist es zum Beispiel möglich, dass gemäß der Figur 2 die Applikation zwar direkt aus dem Automatisierungsnetzwerk AN bezogen wird, danach jedoch die logische Verbindung zur Konfigurierung gemäß der Verbindung DV1 der Figur 1 direkt zwischen dem mobilen Gerät MG und der Komponente NK1 etabliert wird. Dies hat beispielsweise zum Vorteil, dass zum Zeitpunkt der Konfigurierung eine Anwesenheit des Bedieners "vor Ort" sein muss. Auch der umgekehrte Fall kann vorteilhaft eingesetzt werden.

Wichtig ist dabei, dass die Applikation aus dem Automatisierungsnetzwerk AN geladen wird, und nicht etwa aus einem öffentlichen "App-Store" des Internets oder eines öffentlichen Mobilfunknetzes. Ein weiterer wichtiger Aspekt besteht darin, dass gebräuchliche mobile Geräte, insbesondere Tablet-PC's ("iPad", etc.) bzw. Smartphones verwendet werden, weil solche Geräte bereits in der Lage sind, aus einem "App-Store" auf einfache Weise Programmpakete zu beziehen und diese zu starten. Im Vergleich zur Konfigurierung von Komponenten mittels eines Web-Browsers haben solche "Apps" den Vorteil, dass diese eine wesentlich bessere Performance aufweisen können, weil sie nicht mittels einer Interpretersprache (z.B. Java) in einem Browser laufen müssen, sondern direkten Zugriff auf alle Ressourcen des mobilen Gerätes besitzen. Insbesondere haben solche direkt ablaufenden Applikationen auch Zugriff auf alle vorhandenen Kommunikationsmittel wie Bluetooth-Schnittstelle, Kamera, Infrarot-Schnittstelle, WLAN, RFID-Transceiver oder dergleichen. Weiter haben diese "Apps" den Vorteil, dass diese eigenen Speicher dauerhaft reservieren und verwenden können, so dass Konfigurierungsdaten auch dauerhaft auf dem mobilen Gerät gespeichert werden können.

## Patentansprüche

1. Verfahren zur Konfigurierung einer Komponente (NK1) einer industriellen Automatisierungsanordnung,
wobei durch die Konfigurierung in der Komponente zumindest ein Parameter eingegeben oder verändert wird,
wobei die Komponente (NK1) mit weiteren Komponenten (NK2, NK3) der Automatisierungsanordnung mittels eines Automatisierungsnetzwerkes (AN) verknüpft ist,
**dadurch gekennzeichnet,**
**dass** zur Konfigurierung ein mobiles Gerät (MG) eingesetzt wird,
wobei in einem ersten Schritt eine zur Konfigurierung eingerichtete Applikation von einer der Komponenten (NK1) des Automatisierungsnetzwerkes (AN) zu dem mobilen Gerät übertragen wird,
wobei in einem zweiten Schritt die Applikation auf dem mobilen Gerät zur Ausführung gebracht wird,
wobei in einem dritten Schritt zwischen den mobilen Gerät und der zu konfigurierenden Komponente (NK1) eine logische Verbindung etabliert (DV1, DV2) wird, und
wobei in einem vierten Schritt mittels der logischen Verbindung (DV1, DV2) der zumindest eine Parameter durch die Applikation des mobilen Gerätes eingegeben oder verändert wird.

2. Verfahren nach Patentanspruch 1,
**dadurch gekennzeichnet,**
**dass** als das mobile Gerät (MG) ein Tablet-PC oder ein Smartphone verwendet wird.

3. Verfahren nach einem der vorhergehenden Patentansprüche, **dadurch gekennzeichnet,**
**dass** die Applikation aus einem eine Mehrzahl von Applikationen bereit haltenden Programmspeicher abgerufen wird.

4. Verfahren nach Patentanspruch 3,
**dadurch gekennzeichnet,**
**dass** der Programmspeicher in dem mobilen Gerät (MG) als Programmquelle für Applikationen voreingestellt ist.

5. Verfahren nach einem der vorhergehenden Patentansprüche, **dadurch gekennzeichnet, dass**
in dem ersten Schritt die Applikation von der zu konfigurierenden Komponente (NK1) zu dem mobilen Gerät (MG) übertragen wird.

6. Verfahren nach einem der Patentansprüche 3 bis 5,
**dadurch gekennzeichnet, dass**
in dem Programmspeicher eine Mehrzahl für eine Konfigurierung von Komponenten (NK1) einer industriellen Automatisierungsanordnung geeigneten Applikationen aufweist, wobei anhand des Typs der zu konfigurierenden Komponente (NK1) und/oder anhand der technischen Plattform des mobilen Gerätes (MG) eine geeignete der Applikationen ausgewählt, zu dem mobilen Gerät (MG) übertragen und zur Konfigurierung der Komponente (NK1) eingesetzt wird.

7. Verfahren nach einem der vorhergehenden Patentansprüche, **dadurch gekennzeichnet, dass**
die logische Verbindung (DV1, DV2) mittels einer drahtlosen Verbindung zwischen der zu konfigurierenden Komponente (NK1) und dem mobilen Gerät etabliert wird.

8. Verfahren nach Patentanspruch 7,
**dadurch gekennzeichnet,**
**dass** als die drahtlose Verbindung eine Bluetooth-Verbindung oder eine W-LAN-Verbindung verwendet wird.

9. Verfahren nach Patentanspruch 7,
**dadurch gekennzeichnet,**
**dass** die drahtlose Verbindung ein RFID-Übertragungsprotokoll verwendet.

10. Applikation zur Konfigurierung einer Komponente (NK1) einer industriellen Automatisierungsanordnung,
**dadurch gekennzeichnet,**
**dass** die Applikation zur Verwendung mit einem mobilen Gerät (MG) in einem der vorstehend beschriebenen Verfahren eingerichtet ist,
**dass** die Applikation auf einer logisch in der Automatisierungsanordnung angeordneten Komponente (NK1) gespeichert ist, dass die Applikation von der Komponente (NK1) auf das mobile Gerät (MG) übertragbar ist, und
**dass** die Applikation bei ihrer Ausführung auf dem mobilen Gerät (MG) zur Etablierung einer logischen Verbindung (DV1, DV2) zu der zu konfigurierenden Komponente (NK1) und zur Konfigurierung dieser Komponente (NK1) mittels der Verbindung (DV1, DV2) eingerichtet ist.
